(19) **Europäisches Patentamt**
**European Patent Office**
**Office européen des brevets**

(11) Veröffentlichungsnummer: **0 364 916**

**A1**

(12) # EUROPÄISCHE PATENTANMELDUNG

(21) Anmeldenummer: **89119154.6**

(51) Int. Cl.⁵: **C01B 23/00**

(22) Anmeldetag: **16.10.89**

(30) Priorität: **21.10.88 DE 3835825**

(43) Veröffentlichungstag der Anmeldung:
**25.04.90 Patentblatt 90/17**

(84) Benannte Vertragsstaaten:
**AT BE CH ES FR GB GR IT LI LU NL SE**

(71) Anmelder: **Forschungszentrum Jülich GmbH**
**Postfach 1913**
**D-5170 Jülich(DE)**

(72) Erfinder: **Klatt, Karl-Heinz**
**Wendelinusstrasse 64**
**D-5170 Jülich(DE)**
Erfinder: **Meuffels, Paul, Dr.**
**Weinbergstrasse 1**
**D-5132 Übach-Palenberg(DE)**
Erfinder: **Pörschke, Elmar**
**Melatener Strasse 87a**
**D-5100 Aachen(DE)**
Erfinder: **Wenzl, Helmut, Prof.**
**Nordstrasse 9**
**D-5170 Jülich(DE)**

(54) **Vorrichtung zum Reinigen von Edelgasen.**

(57) Zum Reinigen von Edelgasen mittels eines Gettermaterials wird von einer Einrichtung ausgegangen, die das Gettermaterial innerhalb eines evakuierbaren Innenraums eines Behälters enthält, der einen Anschluß für eine Vakuumpumpe sowie eine zum Innenraum führende, absperrbare Zuleitung und eine absperrbare Abzugsleitung für das Edelgas aufweist. Um die Edelgase mit hohem Reinheitsgrad entnehmen zu können, ist der Behältereinsatz (1) für das Gettermaterial (2) beheizbar ausgebildet und von einer kühlbaren Behälterwand (4) mit Abstand umgeben. Der Behältereinsatz (1) weist zumindest zwei vom zu reinigenden Edelgas hintereinander zu durchströmende Heizstufen (11a, 11b) auf.

FIG. 1

## Vorrichtung zum Reinigen von Edelgasen

Die Erfindung bezieht sich auf eine Vorrichtung zum Reinigen von Edelgasen mittels Gettermaterials, das innerhalb eines evakuierbaren Innenraums eines Behälters eingesetzt ist. Der Behälter weist einen Anschluß für eine Vakuumpumpe sowie eine zum Innenraum geführte Zuleitung für das zu reinigende Edelgas auf, die absperrbar ist. Über eine ebenfalls absperrbare Abzugsleitung ist das beim Kontakt mit dem Gettermaterial gereinigte Edelgas aus der Einrichtung abziehbar.

Einrichtungen dieser Art sind bekannt. Als Gettermaterialien werden Granulate in den Innenraum eingefüllt, die die mit dem Edelgas einströmenden Verunreinigungen, wie $H_2O$, $CO_x$, $NO_x$, $O_2$, $N_2$ und Kohlenwasserstoffe, an der aktivierten Oberfläche des Gettermaterials dissoziieren und im Material irreversibel chemiesorbieren. Als Gettermaterialien sind beispielsweise Ti, U, V. bekannt.

Aus dem Behälter läßt sich gereinigtes Edelgas abziehen. Nachteilig ist jedoch wegen der zur Getterung notwendigen Temperaturerhöhung eine ständige Permeation diffusionsfähiger Verunreinigungen aus der Umgebung durch die Behälterwand hindurch und Desorptionen von der Behälterwand in den Innenraum. Es sind deshalb keine höheren Edelgasreinheitsgrade zu erreichen. Die abzuziehenden Edelgase weisen noch einen Anteil von wenigstens 0,01 ppm Verunreinigungen auf.

Aufgabe der Erfindung ist es, eine Vorrichtung zu schaffen, aus der die Edelgase mit höheren Reinheitsgraden entnommen werden können. Die Gesamtleckrate (He-Integralleckrate und Desorption von den Innenwänden) soll einen Wert von $\leq 10^{-9}$ mbar . l/s aufweisen.

Diese Aufgabe wird bei einer Vorrichtung der eingangs genannten Art gemäß der Erfindung durch die in Patentanspruch 1 angegebenen Merkmale gelöst. Das Gettermaterial wird in einen Behältereinsatz eingefüllt, der beheizbar und von einer kühlbaren Behälterwand mit Abstand umgeben ist. Der Behältereinsatz mit vorgesehener Heizung und das Gettermaterial - sowie auch die Behälterwand während der Aktivierungsphase des Gettermaterials - können so unter Vakuum störungsfrei ausgasen. Durch die Kühlung der äußeren Behälterwand bei Betrieb der Vorrichtung und Reinigung der Edelgase bleibt die Permeation gering. Die äußere Behälterwand wird auf einer Temperatur gehalten, bei der die Permeation von Verunreinigungen praktisch unterdrückt ist.

Weiterbildungen der Erfindung sind in Patentansprüchen 2 bis 4 angegeben. Danach weist der Behältereinsatz zumindest zwei Heizstufen auf, die vom zu reinigenden Edelgas hintereinander durchströmt werden. Beide Heizstufen erwärmen das Gettermaterial auf unterschiedliche Temperaturen, so daß für die zu absorbierenden Verunreinigungen im Edelgas jeweils optimale Absorptionsverhältnisse einstellbar sind. Mit den Heizstufen lassen sich sowohl die Aktivierungstemperatur als auch die niedrigeren Betriebstemperaturen für das Gettermaterial optimal einstellen. Während der Aktivierung wird der Behältereinsatz mit dem Gettermaterial sowie der Zwischenraum zwischen Behältereinsatz und Behälterwand evakuiert.

Wesentlich für das Ziel, der Vorrichtung ein hochreines Edelgas entnehmen zu können, ist es auch, den Behältereinsatz und insbesondere alle am Behältereinsatz angeschlossenen Zuleitungen ultrahochvakuumdicht auszuführen.

Nachfolgend wird die Erfindung anhand von Ausführungsbeispielen näher beschrieben. Die Zeichnung zeigt im einzelnen:

Figur 1 Einrichtung zur Edelgasreinigung mit kontinuierlichem Gasdurchgang;

Figur 2 hintereinander und parallel geschaltete Einrichtungen nach Figur 1 für alternativen Betrieb.

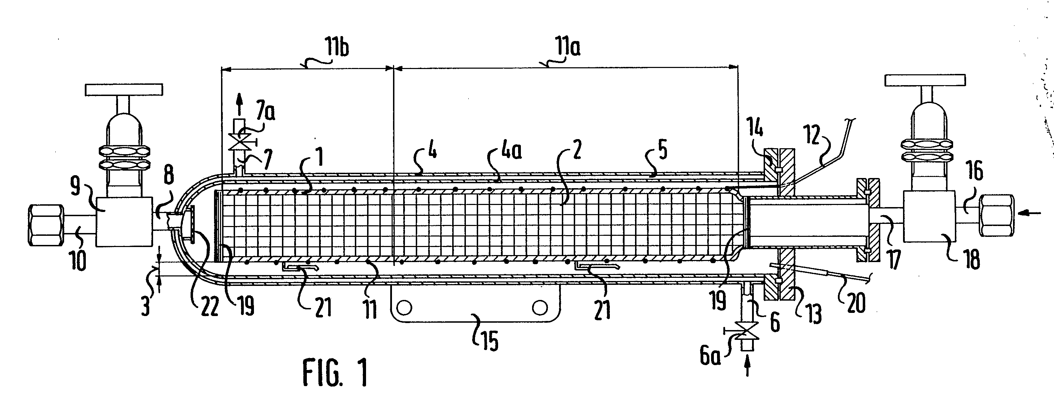

In Figur 1 ist eine Einrichtung zum Reinigen von Edelgas schematisch wiedergegeben. Die Einrichtung weist einen im Ausführungsbeispiel elektrisch beheizbaren Behältereinsatz 1 auf, der mit granuliertem Gettermaterial 2 gefüllt ist. Im Ausführungsbeispiel handelt es sich um ein Granulat eines ZrFeAl-Sintermaterials. Die Granulatgröße der Sinterkörper beträgt Länge L = 6 mm, Durchmesser d = 6 mm 0.

Der Behältereinsatz 1 ist mit Abstand 3 von einer doppelwandig ausgeführten Behälterwand 4 umgeben, deren innere Wand 4a aus Stahl z.B. der Sorte 1.4301 besteht. Der Hohlraum 5 der doppelwandigen Behälterwand 4 ist über Kühlmittelanschlüsse 6, 7 mit Kühlmittel befüllbar. Im Ausführungsbeispiel dient als Kühlmittel Wasser, das den Hohlraum 5 vom Kühlmitteleinlaß 6 zum Kühlmittelauslaß 7 durchfließt. Am Kühlmitteleinlaß und am Kühlmittelauslaß sind Absperrhähne 6a, 7a vorgesehen.

Der durch den Abstand 3 zwischen Behältereinsatz 1 und äußerer Behälterwand 4 gebildete Zwischenraum ist über eine Abzugsleitung 8 mit Ventil 9 und Gasleitung 10 mit einer in der Zeichnung nicht dargestellten Vakuumpumpe zur Erzeugung ultrahohen Vakuums (UHV) oder mit einer entsprechenden UHV-Anlage verbunden und nach Öffnen des Ventils 9 über die Gasleitung 10 absaugbar. Alle in den Zwischenraum und den mit Gettermaterial 2 gefüllten Innenraum des Behältereinsatzes 1 eingedrungenen Verunreinigungen lassen sich so in vorteilhafter Weise absaugen. Dies geschieht vorwiegend während der Aktivierung des Gettermaterials. Der Innenraum des Behältereinsatzes 1 bleibt so von Verunreinigungen frei.

Der Behältereinsatz 1 besteht aus Inconel oder Edelstahl der Sorte 1.4404 und ist mit einer elektrischen Heizung mit Heizelementen 11 (Coaxialheizleitern mit kalten Enden) versehen. Elektrische Anschlüsse 12 für die Heizelemente 11 sind durch einen Deckel 13 hindurchgeführt, der an einem Flansch 14 an der Behälterwand 4 befestigt ist.

Im Ausführungsbeispiel lassen sich die Heizelemente 11 in zwei Heizstufen 11a, 11b schalten, die vom zu reinigenden Edelgas hintereinander durchströmt werden. Mit der ersten Heizstufe 11a läßt sich im Gettermaterial eine Betriebstemperatur zwischen 250 und 350$^\circ$C, bevorzugt 300$^\circ$C einstellen. In dieser Heizstufe dissoziieren im Edelgas enthaltene Fremdgasmoleküle wie $H_2O$, $CH_4$, $O_2$, $N_2$, und es werden am Gettermaterial Sauerstoff, Stickstoff und Kohlenstoff irreversibel chemisch adsorbiert (Chemisorption). Mit der zweiten Heizstufe 11b ist im Gettermaterial eine Temperatur zwischen 20 und 150$^\circ$C, bevorzugt 40$^\circ$C einstellbar. Bei dieser Temperatur wird der im Edel gas vorhandene und durch Dissozation in der Heizstufe 11a zuvor gebildete Wasserstoff im Gettermaterial gebunden, und zwar entsprechend dem bei der eingestellten Temperatur gegebenen Gleichgewichtsdruck des Wasserstoffs, der z.B. bei 30$^\circ$C nur $10^{-14}$ mbar beträgt. Das aus der Einrichtung entnehmbare Edelgas enthält also nur noch einen entsprechend geringen Wasserstoffanteil.

Zur Aktivierung des Gettermaterials und zur Ausheizung des Behältereinsatzes ist mit den Heizstufen eine Temperatur von 450$^\circ$C erreichbar. Das Aktivieren findet unter gleichzeitiger Evakuierung des mit Gettermaterial 2 gefüllten Innenraumes des Behältereinsatzes 1 statt.

Im Ausführungsbeispiel ist die Einrichtung zur Edelgasreinigung liegend ausgeführt. An der äußeren Behälterwand 4 ist eine Halterung 15 vorgesehen. Das zu reinigende Gas strömt über eine Zuleitung 16 am Rohrstutzen 17 in den Innenraum des Behältereinsatzes ein. Die Zuleitung 16 ist mittels eines Ventils 18 verschließbar.

Das zu reinigende Edelgas durchströmt den mit Gettermaterial gefüllten Innenraum des Behältereinsatzes und wird gereinigt über die Abzugsleitung 8 und die Gasleitung 10 abgezogen. Der Innenraum des Behälters ist beidseitig mit Filtern 19 abgeschlossen, um das Gettermaterial beim Durchströmen des Edelgases im Innenraum zurückzuhalten.

Zur Temperaturkontrolle sind in den Behältereinsatz 1 über einen Thermoelementenanschluß 20 zwei Mantelthermoelemente 21 beispielsweise aus NiCr-Ni eingesetzt. Mit diesen Mantelthermoelementen werden die Aktivierungstemperatur des Gettermaterials und die Betriebstemperaturen über die Heizstufen 11a, 11b eingestellt.

Das im Ausführungsbeispiel eingesetzte Gettermaterial wird bei 450$^\circ$C ein bis zwei Stunden lang aktiviert. Während des Aktivierens wird der Innenraum des Behältereinsatzes 1 über die Gasleitung 10 evakuiert, die hierzu mit der UHV-Anlage verbunden wird. Das Evakuieren ist bei entsprechendem Anschluß an die UHV-Anlage auch über die Zuleitung 16 möglich. Die Evakuierung des Innenraums über die Gasleitung 10 erfolgt im allgemeinen bei geschlossenem Ventil 18 in der Zuleitung 16, bei geöffnetem Ventil, falls auch die angeschlossenen Rohrleitungen evakuiert werden sollen.

Bei der in Figur 1 wiedergegebenen Einrichtung bleibt nach Abschluß der Aktivierungsphase das Ventil 18 noch geschlossen, während die Behälterwand 4 nun mit Wasser gekühlt wird. Die Temperatur im Gettermaterial wird von 450$^\circ$C auf die Betriebstemperatur zur Chemisorption mit der ersten Heizstufe 11a bevorzugt auf 300$^\circ$C, mit der zweiten Heizstufe 11b bevorzugt auf 40$^\circ$C eingestellt. Im Anschluß daran wird dann bei göffnetem Ventil 18 über die Zuleitung 16 zu reinigendes Edelgas in den Behältereinsatz 1 bis zu einem maximalen Druck von $P_{max}$ = 5 bar eingelassen. Das Edelgas durchströmt den mit Gettermaterial gefüllten Innenraum des Behältereinsatzes und wird über die Gasleitung 10 gereinigt entnommen. Um Feststoffteilchen zurückzuhalten, ist vor dem Gasausgang an der Abzugsleitung 8 ein den Gasausgang schützendes Prallblech 22 angebracht.

Ist das Gettermaterial gesättigt (was bei einer Korngröße L = 6 mm, d = 6 mm Ø und einem Durchsatz von rund 200 Ncm$^3$/min Edelgas mit Ausgangswerten für den Anteil der Verunreinigungen von 0,001 ppm in rund 3 Monaten zu erwarten ist), wird das Gettermaterial unter Evakuieren wieder aktiviert. Bei einer Temperatur von 450$^\circ$C extrahiert der reversibel im Gettermaterial gelöste Wasserstoff und die chemisorbierten Gasanteile diffundieren von der Oberfläche des Granulats in das Innere des Gettermaterials, so daß sich auf dem Granulat wieder eine aktive Oberfläche ergibt. Die Reaktivierung der Oberfläche läßt sich mehrmals wiederholen, ehe das Gettermaterial gegen frisches Material ausgetauscht werden muß.

Durch den Einsatz der zweistufigen Innenheizung und der wassergekühlten Außenwand sind Reinheiten von $\leq$ 1 ppb erreichbar. Dabei ist sicherzustellen, daß alle Zuleitungen, die am Behältereinsatz angeschlossen sind, in gleicher Weise wie der Behältereinsatz selbst ultrahochvakuumdicht ausgebildet sind. Die Zuleitungen sollten zur Reinigung auch ausheizbar sein.

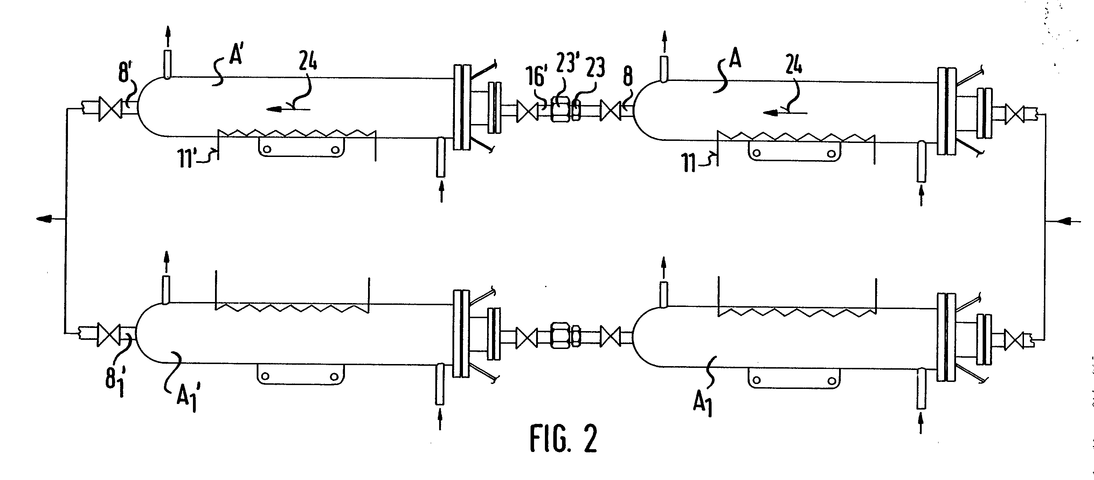

Die beiden Heizstufen lassen sich auch in einer Einrichtung mit hintereinandergeschalteten Gasreinigungseinheiten A, A′ vorbeschriebener Art realisieren, Figur 2. Die Einheiten sind kontinuierlich von Edelgas durchströmbar und weisen hierzu Anschlüsse 23, 23′ auf, die die jeweils in die Innenräume der Behältereinsätze eingeführten Abzugs- und Zuführungsleitungen 8 und 16′ der beiden Einheiten miteinander verbinden. Bei den hintereinandergeschalteten Gasreinigungseinheiten gemäß Figur 2 wird die Einheit A vom zu reinigenden Edelgas zuerst durchströmt. Das gereinigte Edelgas wird von der Einrichtung A′ (Abzugsleitung 8′) entnommen.

Die hintereinandergeschalteten Gasreinigungseinheiten A, A′ weisen Heizungen 11, 11′ auf. Die Heizungen sind in Figur 2 nur schematisch wiedergegeben. Mit der Heizung 11 läßt sich in der Einheit A im Innenraum des Be hältereinsatzes eine Temperatur zwischen 250 bis 350° C bevorzugt 300° C einstellen, in der Einheit A′ wird das Gettermaterial mittels der Heizung 11′ auf einer Temperatur zwischen 20 und 150° C, im wesentlichen zwischen 20 und 60° C, bevorzugt bei 40° C gehalten. In der Gasreinigungseinheit A findet die Dissoziation der Verunreinigung und die Chemisorption von Sauerstoff, Kohlenstoff und Stickstoff statt, in der Einheit A′ wird im Gettermaterial der Wasserstoff gelöst. In Figur 2 ist die Strömungsrichtung der die hintereinandergeschalteten Gasreinigungseinheiten durchströmenden Edelgase mit Bezugszeichen 24 angegeben.

In Figur 2 sind zwei parallel geschaltete Einrichtungen wiedergegeben, von denen jeweils die vom Edelgas zuerst durchströmten Gasreinigungseinheiten A, $A_1$ zur Chemisorption auf 300 bis 350° C aufheizbar sind, während die zweiten der Einheiten, die Gasreinigungseinheiten A′, $A_1$′ zur Wasserstofflösung auf bevorzugt 40° C erwärmbar sind. Die Parallelschaltung erlaubt die Einrichtungen quasi kontinuierlich zu betreiben, wobei in derjenigen Betriebsphase, in der die Einheiten A, A′ vom Edelgas kontinuierlich nacheinander zur Gasreinigung durchströmt werden, die parallel geschalteten Einheiten $A_1$, $A_1$′ gesäubert und reaktiviert werden. Sind die Gettermaterialien in den Einrichtungen A, A′ beladen, so wird der Betrieb umgeschaltet und das Edelgas in den Einrichtungen $A_1$, $A_1$′ gereinigt, während die Einheiten A, A′ reaktiviert werden. Über die Abzugsleitungen 8′, $8_1$′ der Einrichtungen A′, $A_1$′ wird jeweils gereinigtes Edelgas entnommen.

Im Ausführungsbeispiel werden in den Einheiten maximal 200 Ncm³/min Edelgas kontinuierlich gereinigt. Die Chemisorption erfolgt bei 300 bis 350° C, die Lösung des

Wasserstoffs bei 30 bis 50° C. In diesem Temperaturbereich ist der Wasserstoff-Gleichgewichtsdruck < $10^{-14}$ mbar, was zu einem Reinheitsgrad des Edelgases von ≤ 1 ppb führt.

## Ansprüche

1. Vorrichtung zum Reinigen von Edelgasen mittels Gettermaterial, das innerhalb eines evakuierbaren Innenraums eines Behälters eingesetzt ist, der einen Anschluß für eine Vakuumpumpe sowie eine zum Innenraum führende, absperrbare Zuleitung und eine absperrbare Abzugsleitung für das Edelgas aufweist,
**dadurch gekennzeichnet,**
daß das Gettermaterial (2) in einem beheizbaren Behältereinsatz (1) untergebracht ist, der von einer kühlbaren Behälterwand (4) mit Abstand umgeben ist.

2. Vorrichtung nach Anspruch 1,
**dadurch gekennzeichnet,**
daß der Behältereinsatz (1) mit zumindest zwei vom zu reinigenden Edelgas hintereinander durchströmbaren Heizstufen (11a, 11b) ausgerüstet ist.

3. Vorrichtung nach Anspruch 1 oder 2,
**dadurch gekennzeichnet,**
daß der durch den Abstand (3) zwischen Behältereinsatz (1) und Behälterwand (4) gebildete Zwischenraum zusammen mit dem Behältereinsatz (1) evakuierbar ist.

4. Vorrichtung nach einem der vorhergehenden Ansprüche,
**dadurch gekennzeichnet,**
daß der Behältereinsatz (1) und alle am Behältereinsatz angeschlossenen Zuleitungen (16, 18; 9, 10) ultrahoch vakuumdicht ausgeführt sind.

FIG. 1

FIG. 2

EP 0 364 916 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2177079 (TAIYO SANSO)<br>* Seite 2, Zeile 53 - Seite 3, Zeile 8; Anspruch 11; Figuren 4-7 * | 1, 3, 4 | C01B23/00 |
| X | * Figur 10 *<br>--- | 2 | |
| X | BE-A-792561 (S.A.E.S. GETTERS)<br>* das ganze Dokument *<br>--- | 1-4 | |
| A | US-A-3966433 (MOLITOR)<br>----- | | |

| | RECHERCHIERTE SACHGEBIETE (Int. Cl.5 ) |
|---|---|
| | C01B |

Der vorliegende Recherchenbericht wurde für alle Patentansprüche erstellt

| Recherchenort | Abschlußdatum der Recherche | Prüfer |
|---|---|---|
| DEN HAAG | 07 FEBRUAR 1990 | ZALM W.E. |